Europäisches Patentamt

European Patent Office

Office européen des brevets

(11) Veröffentlichungsnummer : **0 120 181**
**B1**

# (12) EUROPÄISCHE PATENTSCHRIFT

(45) Veröffentlichungstag der Patentschrift :
28.05.86

(21) Anmeldenummer : 84100116.7

(22) Anmeldetag : 07.01.84

(51) Int. Cl.⁴ : **F 01 N   1/04**, F 01 N   1/10,
**F 01 N   1/24**

(54) **Absorptionsschalldämpfer für gasdynamische Druckwellenmaschinen.**

(30) Priorität : 23.02.83 CH 1016/83

(43) Veröffentlichungstag der Anmeldung :
03.10.84 Patentblatt 84/40

(45) Bekanntmachung des Hinweises auf die Patenterteilung : 28.05.86 Patentblatt 86/22

(84) Benannte Vertragsstaaten :
CH DE FR GB IT LI

(56) Entgegenhaltungen :
DE-A- 2 930 162
DE-C-   891 343
FR-A- 1 112 226
FR-A- 1 571 729
FR-A- 2 287 599
FR-E-    66 177
US-A- 3 104 732

(73) Patentinhaber : BBC Aktiengesellschaft Brown,
Boveri & Cie.
Haselstrasse
CH-5401 Baden (CH)

(72) Erfinder : Komauer, Christian
Boldirain 2
CH-5415 Rieden/Nussbaumen (CH)
Erfinder : Spinnler, Fritz
Waldenburgstrasse 6
CH-4410 Liestal (CH)
Erfinder : Kollbrunner, Tony
Langackerstrasse 39
CH-8704 Herrliberg (CH)

## Beschreibung

Die Erfindung betrifft einen Absorptionsschalldämpfer für einen mit einer gasdynamischen Druckwellenmaschine aufgeladenen Verbrennungsmotor.

Während der Gesamtgeräuschpegel eines mit einer gasdynamischen Druckwellenmaschine (im folgenden Druckwellenlader DWL genannt) im allgemeinen nicht oder nur geringfügig höher als der mit einem Abgasturbolader (ATL) aufgeladenen Motor ist, wird das schmalbandige Geräusch im Bereich der DWL-Drehklangfrequenz, der sogenannte DWL-« Pfiff », als lästig empfunden. Demnach hat das Auspuffgeräusch eines mit DWL aufgeladenen Dieselmotors grundsätzlich einen anderen Klangcharakter als jenes eines Saugmotors oder jenes eines mit ATL aufgeladenen Motors. Beim DWL-aufgeladenen Motor fallen die niederfrequenten Geräuschanteile der einzelnen Auspuffstösse weg, deshalb, weil keine direkte Verbindung vom Abgassammler zur Abgasleitung besteht ; was übrig bleibt, ist ein hochfrequentes sirenenartiges Geräusch, das als « Pfiff » sinnlich wahrgenommen wird.

Bekannt ist, dass eine Schalldämpfung dann eintritt, wenn die Schallwelle in absorbierendes Material eintritt und dort ihre Energie in Wärme umgewandelt wird.

Die Patentschrift CH 559 310 beschreibt zum Beispiel eine solche Schalldämpfung.

Es sind auch Massnahmen bekannt, welche das Ziel verfolgen, die ladeluftseitigen Geräusche zu reduzieren. So wird die Ladeluftleitung durch die Einführung mechanischer reflexionsartiger Vorkehrungen geräuschdämmend ausgestaltet. Das gleiche gilt auch für die Ansaugleitung. Bei beiden Elementen werden durch die Einführung eines Krümmers gute Resultate erzielt. Eine weitere Vorkehrung besteht darin, die gesamte Druckwellenmaschine einzukapseln. Die daraus sich ergebende Wirkung ist eine Reduzierung der Körpergeräusche. Allgemein lässt sich sagen, dass die geräuschdämmenden Vorkehrungen der Ladeluft- oder Ansaugleitung vorgeschaltet, integriert oder nachgeschaltet werden können.

Was die Anordnung der schalldämpfenden Auspufftöpfe anbelangt, so beanspruchen die bekannten Lösungen einen grossen Platzbedarf. Die Führung der Auspuffleitung und die Unterbringung der einzelnen Auspufftöpfe gestaltet sich, so bei dem reduzierten zur Verfügung stehenden Platz im heutigen Kraftfahrzeugebau, äusserst schwierig. Eine gängige Lösung besteht darin, dass das Auspuffrohr ab Motorenblock unmittelbar in einen ersten abgewinkelten Auspufftopf mündet. Diese Abwinklung ist deshalb nötig, damit die Auspuffrohrlinienführung an die Unterseite der Karosserie verlegt werden kann. Etwa in einer Mittelstellung zwischen Vorder- und Hinterachse wird ein zweiter relativ kurzer Auspufftopf plaziert. Der jeweilige Durchmesser ist vorbestimmend für die Bodenfreiheit des Kraftfahrzeuges. Nicht selten müssen solche mittig plazierten Auspufftöpfe in schwer zugängliche Innennsichen verlegt werden, was für die Montage und Wartung Nachteile mit sich bringt. Ab Ausgang dieses mittleren Auspufftopfes muss das Auspuffrohr weiter hinten, bedingt durch die Hinterachse des Kraftfahrzeuges, noch zum Teil recht massiv nach oben abgekröpft werden. Nach der Abkröpfung endet das Auspuffrohr in dem hinterachsigen Auspufftopf. Das Mass der Abkröpfung des Auspuffrohres innenwagenseitig steht jeweils in Abhängigkeit zur Höhenlage des mittig plazierten Auspufftopfes.

Aufgabe der Erfindung ist es, einen Absorptionsschalldämpfer zu schaffen, der kraftfahrzeugeinbaufreundlich ist, und nicht wesentlich dicker als das eigentliche Auspuffrohr ist, so dass ein Wegfall der bislang benötigten mehreren Auspufftöpfe bei herabgesetzten Kosten möglich ist und die Probleme der Linienführung und Abkröpfung des Auspuffrohres einfacher werden.

Erfindungsgemäss wird diese Aufgabe bei einem Schalldämpfer der eingangs genannten Art mit den kennzeichnenden Merkmalen der Patentansprüche 1 oder 2 gelöst.

Betreffend der Bezugnahme auf den Rotoraussendurchmesser und die Rotorzellenzahl des DWL wird beispielsweise auf die DE-A-24 52 269 verwiesen, welche die Geometrie der Druckwellenmaschine zum Gegenstand hat.

Der erfindungsgemässe Schalldämpfer hält die Vorteile der bekannten Schalldämpfer hinsichtlich Absorption bei. Die hierfür notwendigen Komponenten sind einfach, billig und bieten bei deren Montage keine Schwierigkeiten.

Der Haupvorteil ist jedoch die kompakte langgestreckte Bauweise, welche eine problemlose Unterbringung ermöglicht. Die Linienführung der dem Schalldämpfer angeschlossenen Auspuffrohre gestaltet sich dadurch einfacher, insbesondere im Bereich der Hinterachse des Kraftfahrzeuges, deren Ueberbrückung ohne grosse Abkröpfung des Auspuffrohres geschehen kann.

Bei einer vorteilhaften Ausgestaltung des Schalldämpfers geschieht die Absorption unmittelbar stromabwärts des Druckwellenladers. Die doppelwinklige Linienführung des Auspuffrohres ab Druckwellenlader wird von einem Schalldämpfer bekannter Absorptionstechnik ummantelt. Mit dieser Ausgestaltung ist das Auspuffrohr ab Schalldämpfer nicht mehr unterbrochen und dementsprechend auch leicht verlegbar. Des weiteren ist die Zugriffmöglichkeit zum Schalldämpfer, von der Motorenhaube herkommend, einfacher.

Eine weitere vorteilhafte Möglichkeit ergibt sich aus dem Einbau eines integrierten Zusatz-Schalldämpfkörpers in den kompakten langgestreckten Schalldämpfer. Dadurch kann der Schalldämpfer noch flacher ausgelegt werden, was seine Unterbringung ideal gestaltet.

Letztlich kann das Auspuffrohr mehrere langgestreckte Schalldämpfer tragen, was sich auf die Absorption positiv auswirkt. Für eine Geräuschpegelverminderung ist es überdies von Vorteil, wenn die langgestreckten Schalldämpfer Resonatoren aufweisen.

Nachstehend werden Ausführungsbeispiele der Erfindung anhand der Zeichnung erläutert.

Es zeigen :

Figur 1 eine Ansicht der gesamten Auspuffanlage mit einem langgestreckten Schalldämpfer ;

Figur 2 einen Schnitt durch einen Teil eines Absorptionsschalldämpfers ;

Figur 3 eine weitere Ansicht der gesamten Auspuffanlage mit einem doppelwinkligen Schalldämpfer ;

Figur 4 einen Schnitt durch einen perspektivisch gezeichneten Schalldämpfer mit einem Zusatzschalldämpfkörper ;

Figur 5 einen Längsschnitt durch Fig. 4 ;

Figur 6 eine weitere Ansicht der gesamten Auspuffanlage mit mehreren langgestreckten Schalldämpfern ;

Figur 7 Vorkehrung mit Resonatoren ohne Dämpfung, und

Figur 8 Vorkehrung mit Resonatoren mit Dämpfung.

Alle für das Verständnis der Erfindung unwesentlichen Elemente sind nicht dargestellt. Gleiche Elemente sind in den verschiedenen Figuren mit gleichen Bezugsziffern versehen. Die Abgasströmungsrichtung ist mit Pfeilen bezeichnet.

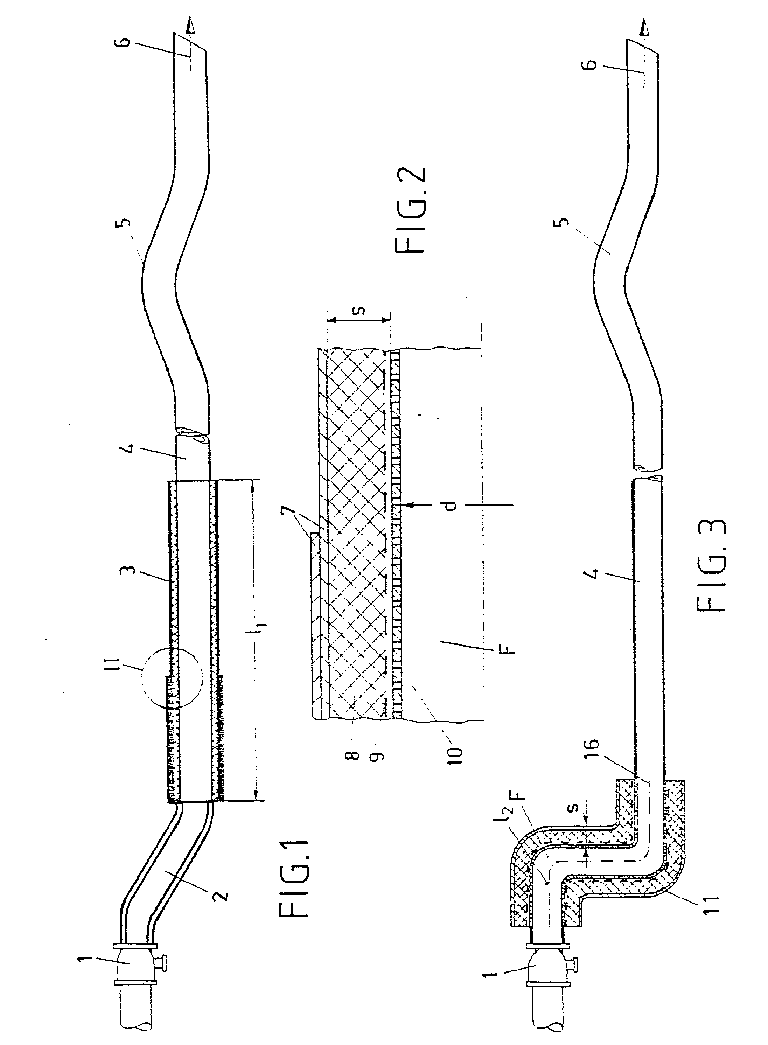

Fig. 1 zeigt die schematische Ansicht der gesamten Auspuffanlage. Ein doppelwandiges Rohr 2 schliesst stromabwärts des Druckwellenladers 1 an, der seinerseits stromabwärts mit einem nicht dargestellten Motorenblock verbunden ist. Von einer höher gelegenen Lage beschreibt das doppelwandige Rohr 2 einen Doppelbogen nach unten und verläuft dann annähernd gerade über der ganzen Unterseite der nicht gezeigten Karosserie, mindestens bis zur auch nicht dargestellten Hinterachse des Kraftfahrzeuges. Durch das vorgesehene doppelwandige Rohr 2 wird erreicht, dass der Körperschall geringer und die Schwingungsanfälligkeit beträchtlich reduziert wird. Wenn der Zwischenraum des doppelwandigen Rohres 2 mit Basalt ausgefüllt wird, vermindert dies zusätzlich den Körperschall und die Schwingungen ; ferner erhält das doppelwandige Rohr 2 dadurch eine gewisse Steifigkeit. Nach dem Doppelbogen schliesst sich dem doppelwandigen Rohr 2 ein Absorptionsschalldämpfer 3 an, dessen Länge $l_1$ mindestens das 10-fache des Rotoraussendurchmessers des Druckwellenladers 1 beträgt. Die äussere Form des langgestreckten Absorptionsschalldämpfers 3 ist dabei nicht notwendigerweise rund. Je nach Platzverhältnissen kann der Absorptionsschalldämpfer 3 auch eine ovale abgeflachte Form einnehmen. Der Innendurchmesser d des Schalldämpfers 3 entspricht annähernd dem Innendurchmesser des Auspuffrohres 4, wobei jene Durchmessergrösse d wiederum abhängig vom Rotoraussendurchmesser des Druckwellenladers ist, und zwar mindestens 0,6 davon.

Wie oben ausgeführt, entspricht der Innendurchmesser d des Schalldämpfers dem Innendurchmesser des Auspuffrohres 4. Wenn nun der Absorptionsschalldämpfer aus Platzgründen eine abgeflachte Form erhält, so ist es vorteilhaft, wenn die innere Gasdurchgangsöffnung geometrisch ebenso vorgesehen wird, denn dadurch hat der Absorptionsschalldämpfer 3 eine einheitliche Querschnittsgeometrie und die für das Isolationsmaterial 8 vorgesehene Zwischenschicht ist über den ganzen Umfang gleich stark. In solchen Fällen kann das Vergleichsmass zwischen Innenöffnung des Absorptionsschalldämpfers 3 und Auspuffrohres 4 nicht mehr die Durchmessergrösse sein, sondern man wird analog die Querschnittsfläche F der beiden Innenöffnungen heranziehen. Nach dem langgestreckten Absorptionsschalldämpfer 3 verläuft das Auspuffrohr 4 bis zur Hinterachse des Kraftfahrzeuges noch geradlinig. Liegt die Linienführung des Auspuffrohres 4 strassenseitig tiefer als die Hinterachse, so wird das Auspuffrohr 4 zu deren Ueberbrückung hierhin abgekröpft. Diese Abkröpfung wird jeweils minimalnotwendig und mit einem sanften Bogen 5 ausgelegt, d. h. unter Vermeidung von scharfen Abwinklungen.

Danach läuft das Auspuffrohr 4 in einem Endstück 6 aus, dessen Höhenniveau in den meisten Fällen dem Verlauf des vorderen Auspuffrohres 4 resp. Absorptionsschalldämpfers 3 entspricht.

Fig. 2 zeigt einen Schnitt durch einen Teil eines Absorptionsschalldämpfers 3. Seine äussere Hülle besteht aus einem mehrwandigen Rohr 7. Selbstverständlich braucht das äussere Rohr nicht die ganze Länge des Absorptionsschalldämpfers 3 zu umhüllen : Aus Stabilitäts- und Dämpfungsgründen kann die zusätzliche Ummantelung nur die vordere druckwellenseitige Partie erfassen. Ein schallschluckendes Isolationsmaterial 8, z. B. Mineralwolle, von der Dicke S umhüllt die innere Kontour des perforierten Bleches 10, die, wie bereits erläutert, nicht notwendigerweise rund sein muss. Zwischen Isolationsmaterial 8 und Lochblech 10 ist ein Metallgeflecht 9 eingebaut, das ein Ausblasen des Isolationsmaterials 8 verhindert. Die Lochteilung und die Grösse der Perforierung des Lochbleches 10 richtet sich nach Grösse des Druckwellenladers 1. Die Dicke S des Isolationsmaterials 8 ist abhängig vom Aussendurchmesser und der Zellenzahl des Rotors des Druckwellenladers 1, wobei mathematisch ausgedrückt folgende Formel gilt :

$$\text{Isolationsdicke } S = \frac{6 \times \text{Rotoraussendurchmesser}}{\text{Zellenzahl}}$$

Es ergibt sich somit eine relativ geringe Isolationsdicke S, weil wie eingangs erwähnt, im Falle DWL-Aufladung nur hochfrequente Geräusche zu dämpfen sind.

Die Perforation des Lochbleches 10 muss dabei nicht notwendigerweise aus runden Löchern bestehen. Von der Kerbwirkung her betrachtet, wird es stets von Vorteil sein, wenn scharfe Kanten vermieden werden ; ovale Schlitze würden sich demnach ohne weiteres dazu eignen. Selbstverständlich ist eine Perforation des Lochbleches 10 aus geometrisch verschiedenen Oeffnungen innerhalb eines Systems denkbar.

Fig. 3 zeigt eine weitere schematische Ansicht der gesamten Auspuffanlage. Der Absorptionsschalldämpfer 11 unterscheidet sich hinsichtlich Form und Lage von der langgestreckten Form aus Fig. 1. Unmittelbar nach Ausgang Druckwellenlader wird ein doppelwinkliger Absorptionsschalldämpfer 11 angeschlossen, der die Linienführung des Auspuffrohres 4 von der Motorenblechebene hinunter zur Karosserieunterseite des Kraftfahrzeuges mitbeschreibt. Was die technischen Merkmale anbelangt, so gilt mit Einschränkung das Gesagte unter Fig. 1 und 2. Die gestreckte Länge $l_2$ des doppelwinkligen Schalldämpfers 11 ist gegenüber der Länge $l_1$ des langgestreckten Schalldämpfers 3 etwa nur halb so gross. Das steht weitgehend im Zusammenhang, dass ein doppelwinkliger Schalldämpfer 11 geometriebedingt auch Reflexionswirkungen entfaltet. Die Geräuschpegelverminderung muss daher nicht ausschliesslich durch Absorption erreicht werden. Der doppelwinklige Schalldämpfer 11 muss umfangsmässig nicht notwendigerweise rund sein. Dort wo die Platzverhältnisse es nicht zulassen, wird man sich für eine ovalförmige abgeflachte Form entscheiden. Der untere Strömungsübergang zwischen Schalldämpfer 11 und Auspuffrohr 4 hat die Form eines Trichters 16. Diese Form erzeugt bekanntlich Reflexionen, was sich auf die Minimalisierung des Geräuschpegels positiv auswirkt.

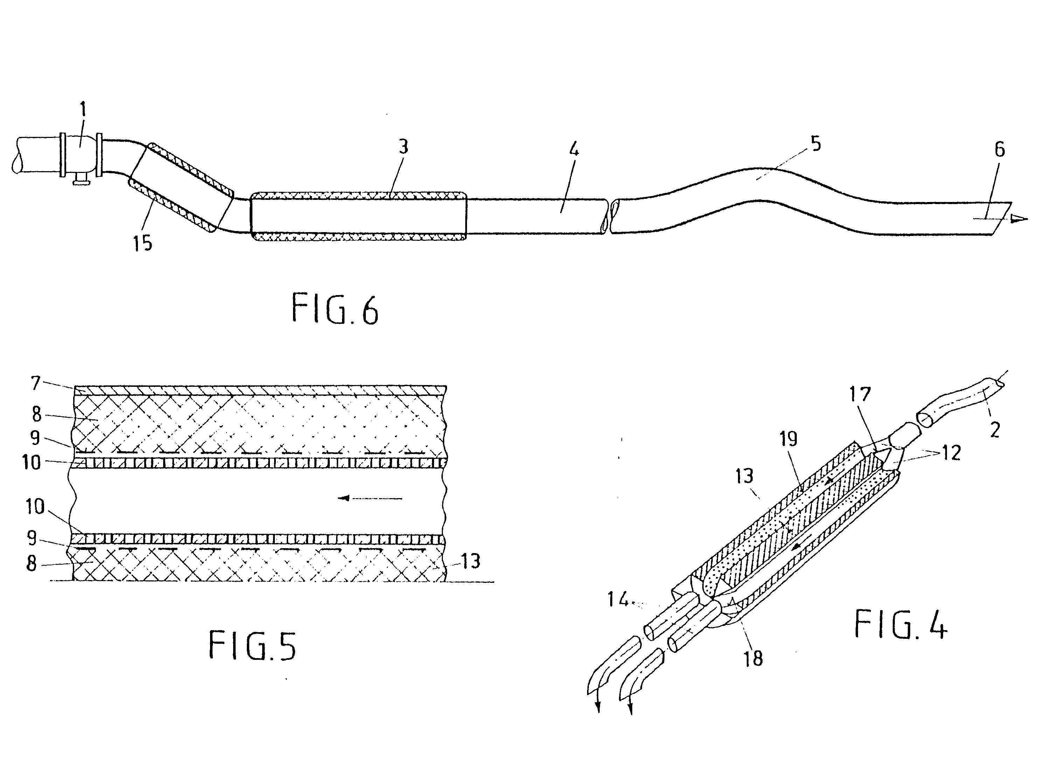

Fig. 4 zeigt einen abgeflachten langgestreckten Schalldämpfer 19, der mit einem an seiner Innenöffnung und über die ganze Länge als Zusatzschalldämpfkörper ausgebildeten Tubus 13 versehen ist. Die Durchströmungsöffnung dieses Schalldämpfers 19 ist ringförmig von unterschiedlicher Querschnittsfläche F. Wie aus Fig. 5 hervorgeht, besteht der Schalldämpfer 19 aus einer äusseren Hülle 7. Eine Schicht aus Isolationsmaterial 8 umhüllt das Lochblech 10 ; ein Drahtgeflecht 9 ist aus bekannten Gründen ebenfalls vorgesehen. Der Tubus 13, der die Durchströmungsöffnung kernähnlich ausfüllt, besteht aus einem äusseren Lochblech 10. Der Innenraum des Tubus 13 wird mit Isolationsmaterial 8 ausgefüllt. Ein Drahtgeflecht 9 verhindert auch hier das Ausblasen des Isolationsmaterials 8. Die Aufhängung des Tubus 13 an der Innenseite der Durchströmungsöffnung kann nach dem bewährten Prinzip mit Flügellaschen erfolgen.

Am Eintritt des Schalldämpfers 19 geht das doppelwandige Auspuffrohr 2 in ein trichterflutiges Auspuffrohr 12 über. Der Tubus 13 ist stromaufwärts konusförmig 17 ausgebildet. Die Durchström-Querschnittsfläche F entspricht der Durchströmungs-Querschnittsfläche des Auspuffrohres 2. Der Austritt des Schalldämpfers 19 ist aus bekannten Ueberlegungen trichterförmig 18 ausgelegt. Die Abgase aus dem Schalldämpfer 19 werden, wenn die Platzverhältnisse es nicht zulassen, statt mit einem Auspuffrohr mit deren zwei weitergeleitet. Ein solches Zwillingauspuffendrohr 14 hat auch den Vorteil, dass die erforderliche Abkröpfung im Bereich der Hinterachse des Kraftfahrzeuges leicht anzubringen ist.

Fig. 6 zeigt eine Auspuffanlage, deren Unterschied zu Fig. 1 lediglich darin besteht, dass anstelle des doppelwandigen Rohres 2 ein Vorschalldämpfer 15 vorgesehen ist. Selbstverständlich können dort, wo die Verhältnisse es erfordern, auch mehrere langgestreckte Schalldämpfer über die ganze Linienführung des Auspuffrohres 4 verteilt werden.

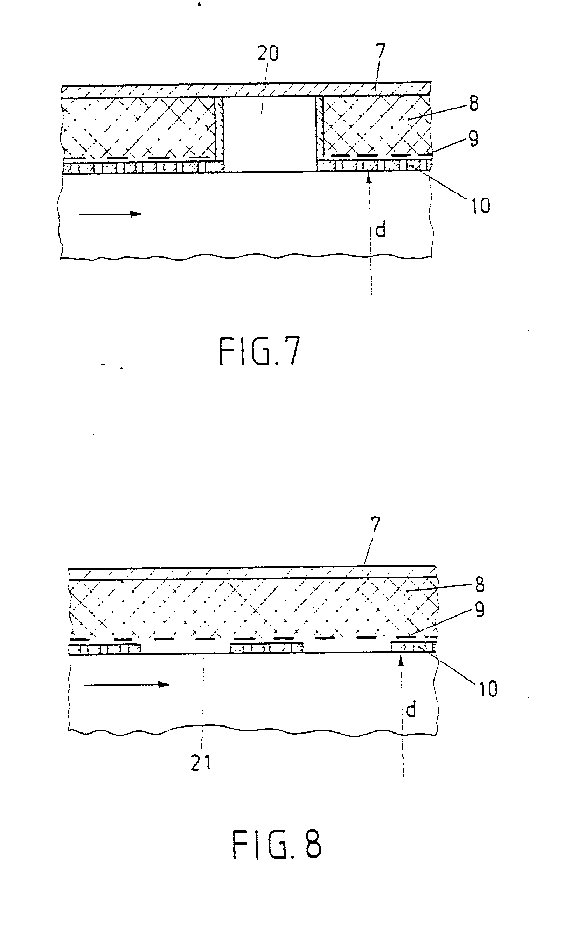

Fig. 7 zeigt die Möglichkeit, im langgestreckten Schalldämpfer 3 einen oder mehrere Resonatoren 20 vorzusehen. Den einfachsten Aufbau eines Schalldämpfers stellt der Helmoholtzresonator dar. Er besteht im wesentlichen aus einem leeren Volumen 20 und einem daran angeschlossenen, beidseitig offenem Rohr. Diese Massnahme wird zusätzlich zum langgestreckter Schalldämpfer 3 getroffen, wobei der Resonator 20 auf die Pfeifenfrequenz der Niederdruck Abgaskanäle des DWL abgestimmt ist.

Fig. 8 geht von demselben Prinzip aus. Hier sind die Resonatoren 21 aber konstruktiv so konzipiert, dass darin zugleich mit dem Einbau von Isolationsmaterial 8 eine breitbanderige Dämpfung bei der Resonatorfrequenz erreicht wird.

**Patentansprüche**

1. Absorptionsschalldämpfer für mit gasdynamischer Druckwellenmaschine aufgeladene Verbrennungsmotoren, dadurch gekennzeichnet, dass der Schalldämpfer (3) mindestens ein langgestreckter Körper ist, dessen Länge $(l_1) \geq$ 10-fach und dessen Innendurchmesser (d), der auch querschnittsflächenmässig annähernd dem Innendurchmesser des Auspuffrohres (4) entspricht, $\geq$ 0,6 des Rotoraussendurchmessers der gasdynamischen Druckwellenmaschine (1) sind, wobei die Isolationsmaterialdicke (5), die unmittelbar den Innendurchmesser (d) oder Innenquerschnitt (F) des langgestreckten Schalldämpfers (3) umhüllt, $\geq$ 6 mal den Rotoraussendurchmesser dividiert durch die Zellenzahl der gasdynamischen Druckwellenmaschine (1) ist.

2. Absorptionsschalldämpfer für mit gasdynamischer Druckwellenmaschine aufgeladene Verbrennungsmotoren, dadurch gekennzeichnet, dass der Schalldämpfer (11) ein doppelwinkelförmiger Körper ist, dessen gestreckte Länge $(l_2) \geq$ 5-fach und dessen Innendurchmesser (d), der auch querschnittsflächenmässig annähernd dem Innendurchmesser des Auspuffrohres (4) entspricht, ⩾ 0,6 des Rotordurchmessers der gasdynamischen Druckwellenmaschine (1) sind, wobei die Isolationsmaterialdicke (S), die unmittelbar den Innendurchmesser (d) oder Innenquerschnitt (F) des doppelwinkligen Schalldämpfers (11) umhüllt, ⩾ 6 mal den Rotoraussendurchmesser dividiert durch die Zellenzahl der gasdynamischen Druckwellenmaschine (1) ist.

3. Absorptionsschalldämpfer nach Anspruch 1, dadurch gekennzeichnet, dass der langgestreckte Körper (3) an seinem Innendurchmesser (d) und über die ganze Länge ($l_1$) einen als Zusatzschalldämpf-körper ausgebildeten Tubus (13) trägt.

4. Absorptionsschalldämpfer nach Anspruch 1, dadurch gekennzeichnet, dass der Schalldämpfer aus mehreren langgestreckten Körpern (3, 15) besteht, welche auf dem Auspuffrohr (4) verteilt sind.

5. Absorptionsschalldämpfer nach Anspruch 1, dadurch gekennzeichnet, dass der Schalldämpfer (3) einen oder mehrere Resonatoren (20, 21) aufweist.

## Claims

1. Absorption noise suppressor for internal combustion engines supercharged by a gas-dynamic pressure wave machine, characterised in that the noise suppressor (3) is at least one longitudinally extended body, whose length ($l_1$) is not less than ten times and whose internal diameter (d), which also corresponds in cross-sectional area approximately to the internal diameter of the exhaust pipe (4), is not less than 0.6 times the rotor external diameter of the gas-dynamic pressure wave machine (1), the insulation material thickness (S), which directly surrounds the internal diameter (d) or internal cross-section (F) of the longitudinally extended noise suppressor (3), being not less than six times the rotor external diameter divided by the number of cells in the gas-dynamic pressure wave machine (1).

2. Absorption noise suppressor for internal combustion engines supercharged by a gas-dynamic pressure wave machine, characterised in that the noise suppressor (11) is a Z shaped body, whose extended length ($l_2$) is no less than five times and whose 2 internal diameter (d), which also corresponds approximately in cross-sectional area to the internal diameter of the exhaust pipe (4), is not less than 0.6 times the rotor diameter of the gas-dynamic pressure wave machine (1), the insulation material thickness (S), which directly surrounds the internal diameter (d) or internal cross-section (F) of the Z shaped noise suppressor (11), being not less than six times the rotor external diameter divided by the number of cells in the gas-dynamic pressure wave machine (1).

3. Absorption noise suppressor according to Claim 1, characterised in that the longitudinally extended body (3) supports a tube (13), designed as an additional noise suppressing body, at its internal diameter (d) and over the complete length ($l_1$).

4. Absorption noise suppressor according to Claim 1, characterised in that the noise suppressor consists of several longitudinally extended bodies (3, 15), which are distributed on the exhaust pipe (4).

5. Absorption noise suppressor according to Claim 1, characterised in that the noise suppressor (3) has one or more resonators (20, 21).

## Revendications

1. Silencieux à absorption pour des moteurs à combustion interne suralimentés au moyen de machines à ondes de pression utilisant la dynamique des gaz, caractérisé en ce que le silencieux (3) est au moins un corps allongé dont la longueur ($l_1$) est supérieure ou égale à 10 fois et dont le diamètre intérieur (d), qui correspond aussi, quant à l'aire de sa section transversale, à peu près au diamètre intérieur du tuyau d'échappement (4), est supérieure ou égale à 0,6 fois le diamètre extérieur du rotor de la machine à ondes de pression (1) utilisant la dynamique des gaz, l'épaisseur (S) de la matière isolante d'enveloppement disposée directement à l'extérieur du diamètre intérieur et/ou de la section interne (F) du silencieux allongé (3) étant égale ou supérieure à 6 fois le diamètre extérieur du rotor divisé par le nombre de cellules de la machine à ondes de pression (1) utilisant la dynamique des gaz.

2. Silencieux à absorption pour des moteurs à combustion interne suralimentés au moyen de machines à ondes de pression utilisant la dynamique des gaz, caractérisé en ce que le silencieux (11) est un corps doublement coudé dont la longueur étendue ($l_2$) est supérieure ou égale à 5 fois et dont le diamètre intérieur (d), qui correspond aussi, quant à l'aire de sa section transversale, à peu près au diamètre intérieur du tuyau d'échappement (4), est égale ou supérieure à 0,6 fois le diamètre du rotor de la machine à ondes de pression (1) utilisant la dynamique des gaz, l'épaisseur (S) de la matière isolante d'enveloppement qui est disposée directement à l'extérieur du diamètre intérieur (d) ou de la section interne (F) du silencieux doublement coudé étant supérieure ou égale à 6 fois le diamètre extérieur du rotor divisé par le nombre de cellules de la machine à ondes de pression utilisant la dynamique des gaz (1).

3. Silencieux à absorption suivant la revendication 1, caractérisé en ce que le corps allongé (3) porte, au niveau de son diamètre intérieur (d) et sur la totalité de sa longueur ($l_1$), un tube (13) ayant la forme d'un corps de silencieux auxiliaire.

4. Silencieux à absorption suivant la revendication 1, caractérisé en ce que le silencieux est formé de plusieurs corps allongés (3, 15) qui sont répartis sur le tuyau d'échappement (4).

5. Silencieux à absorption suivant la revendication 1, caractérisé en ce que le silencieux (3) comporte un ou plusieurs résonateurs (20, 21).

FIG.1

FIG.2

FIG.3

FIG.6

FIG.5

FIG.4

0 120 181

FIG.7

FIG.8